# EUROPÄISCHE PATENTSCHRIFT

(11) **EP 0 708 422 B1**
(45) Veröffentlichungstag und Bekanntmachung des Hinweises auf die Patenterteilung: **06.05.1999**
(21) Anmeldenummer: 95116227.0
(22) Anmeldetag: 14.10.1995
(51) Int. Cl.: G07F 17/10, E05B 73/00, E05B 67/00

(54) **Vorrichtung zum Sichern von beweglichen Sachen, insbesondere Hunden**
Apparatus for securing movable objects, especially dogs
Dispositif de sécurité pour objets mobiles, notamment des chiens

(30) Priorität: 19.12.1994 DE 9420287 U; 18.10.1994 DE 9416751 U; 08.11.1994 DE 9417869 U
(43) Veröffentlichungstag der Anmeldung: 24.04.1996
(73) Patentinhaber: systec POS-Technology GmbH, 82178 Puchheim (DE)
(72) Erfinder: Röper, Brigitte Christiane, D - 22083 Hamburg (DE)
(74) Vertreter: Brommer, Hans Joachim, Dr.-Ing.

(56) Entgegenhaltungen:
- CA-A- 1 171 294
- CH-A- 134 233
- US-A- 1 592 482
- US-A- 2 108 402
- US-A- 2 336 936
- US-A- 3 552 535
- US-A- 4 433 787
- PATENT ABSTRACTS OF JAPAN vol. 016 no. 241 (P-1363) ,3.Juni 1992 & JP-A-04 052796 (KANAI GAKUEN) 20.Februar 1992,

## Beschreibung

Die Erfindung betrifft ein Pfandschloßsystem zum Sichern von beweglichen Sachen, insbesondere zum Anleinen von Hunden gegen unbefugte Wegnahme.

In den letzten Jahren hat sich der Diebstahl von Hunden enorm verstärkt. Laut Statistik werden in manchen Großstädten täglich fünf bis sechs Hunde gestohlen. Der Diebstahl erfolgt häufig dann, wenn der Hund zum Einkaufen mitgenommen wird und vor Geschäften, in die er nicht hinein darf, auf seinen Besitzer warten muß. Vor dem Geschäft angebrachte Befestigungsringe, an denen der Hund angeleint werden kann, bringen hier keine Abhilfe, da die Diebe den Hund mühelos von der Leine losmachen können und der Besitzer in dieser Zeit durch den Einkauf im Laden abgelenkt ist.

Durch die CH-A-134233 ist ein Pfandschloßsystem mit den Merkmalen des Oberbegriffes von Patentanspruch 1 bekannt geworden. Dabei hängt das Pfandschloß an einer Kette, deren anderes Ende an einer Wand oder dergleichen befestigt ist. Das Pfandschloß ist als Bügelschloß ausgebildet, wobei das Öffnen und Schließen des Bügels durch einen Schlüssel erfolgt. Der Öffnungs- oder Schließvorgang wie auch das Abziehen des Schlüssels ist aber nur dann möglich, wenn ein Geldstück in das Pfandschloß eingeworfen worden ist. Die gewünschte Sicherung von Gegenständen vor unbefugter Wegnahme geschieht dadurch, daß das Pfandschloß mit einem Teil der Kette um den Gegenstand herumgeschlungen oder durch ihn hindurchgezogen und der Bügel dann in das dem Schloß möglichst nahe gelegene Kettenglied eingesteckt und sodann verschlossen wird.

Die US-A-1.592.482 zeigt ein Pfandsystem zur Schlüsselaufbewahrung, die CA-A-1.171.294 eine schloßbetätigte Hundeleine.

Außerdem zeigen die US-A 3 552 535 und die JP-A 4 052 796 weitere stationäre Pfandschlösser mit einer flexiblen Befestigungsleine zur Sicherung von Kleidung oder Fahrrädern.

Hiervon ausgehend liegt die Aufgabe der vorliegenden Erfindung darin, eine Sicherung zu entwickeln, die ein unbefugtes Wegnehmen des Hundes zuverlässig ausschließt. Gleichzeitig soll sich diese Sicherung durch relativ einfache Bedienung und durch ausreichende Bewegungsfreiheit für den gesicherten Hund auszeichnen. Nicht zuletzt soll sie auch ein Anreiz zum Besuch solcher Geschäfte geben, die ihren Kunden diese Sicherung anbieten.

Soweit im Rahmen dieser Anmeldung nur die Sicherung von Hunden angesprochen wird. sei darauf hingewiesen, daß die Erfindung sich auch auf die Sicherung anderer beweglicher Sachen erstreckt, insbesondere also auch auf das Sichern von Fahrrädern, Kinderwagen etc.

Die vorstehend umrissene Aufgabe wird durch die kennzeichnenden Merkmale des Anspruches 1 gelöst.

Der Hundehalter steckt also ähnlich wie bei den Pfandschlössern von Einkaufswagen eine Pfandmarke, meist ein Geldstück, in das Pfandschloß worauf ein weiteres Schloß, das über einen Schlüssel oder dergleichen zu bedienen ist, zugänglich wird. Dieses Schloß wird aber nicht total freigegeben, sondern ist mit einem Zugmittel verbunden, dessen anderes Ende fest montiert ist. Dieses Schloß wird mit Hilfe des zugehörigen Schlüssels an der zu sichernden Sache direkt oder unter Schlaufenbildung mit seinem Zugmittel verriegelt, also entweder um den Hals des Hundes herumgeschlungen oder an einem Rahmenteil des Fahrrades oder Kinderwagens verriegelt. Der Kunde kann dann den Schlüssel abziehen und sich in Ruhe seinen Einkäufen widmen. Nach deren Erledigung öffnet er das Schloß wieder mit einem Schlüssel und steckt dieses mitsamt dem darin befindlichen Schlüssel zurück in das Pfandschloß. Nach der Verriegelung im Pfandschloß erhält er seine Pfandmarke wieder zurück.

Besonders zweckmäßig ist es, wenn das weitere Schloß ein Vorhänge- oder Bügelschloß ist, das heißt, daß es aus einem Schloßkörper und einem im entriegelten Zustand gegenüber diesem beweglichen Bügel besteht, der in verriegeltem Zustand in dem Schloßkörper einrastet und damit den Hund oder die zu sichernde Sache festhält und gleichzeitig den Schlüssel freigibt.

In Kombination dazu empfiehlt es sich, daß das Zugmittel als Kette oder als Metallseil mit mehreren aufeinander folgenden Ösen ausgebildet ist. Dadurch kann das Schloß mit dem Zugmittel direkt um den Hals des Hundes oder um ein Teil der zu sichernden Sache herumgeschlungen und entsprechend dem gewünschten Schlaufendurchmesser in eines der Kettenglieder oder in eine der Ösen eingehängt und dort verriegelt werden.

Für die Freigabe und für die Arretierung des Schlosses durch das Pfandschloß gegen Eingabe eines Pfandes bzw. gegen Rückgabe desselben an den Benutzer, bieten sich dem Fachmann zahlreiche Ausführungsmöglichkeiten. Insbesondere kann dabei auf das Kopplungsprinzip zurückgegriffen werden, wie es sich mittlerweile bei den Pfandschlössern von Einkaufswagen bewährt hat. So kann beispielsweise das Schloß ein vorstehendes Verriegelungsteil aufweisen, das in das Pfandschloß hineingesteckt und dort verriegelt ist, wobei die Verriegelung gegen Eingabe einer Pfandmarke aufgehoben wird und die Pfandmarke bei Rückgabe des Schloßes wieder freigegeben wird.

Die Verriegelung des Schloßes im Pfandschloß kann so erfolgen, daß auch der zum Schloß gehörende Schlüssel unzugänglich ist. Zumindest muß sichergestellt sein, daß dieser Schlüssel nicht abgezogen werden kann, ohne eine Pfandmarke in das Pfandschloß zu stecken.

Stattdessen ist es aber auch möglich, den Schlüssel mit einem Fortsatz zu versehen, der im Pfandschloß verriegelbar ist und das Schloß nur mittelbar über den Schlüssel zu sichern, etwa in der Art, daß in verriegelter Stellung des Schlüssels auch sein Schloß gegen Öffnen blockiert ist. Im einfachsten Fall braucht dazu lediglich die Verdrehbarkeit des Schlüssels gegenüber dem Schloß durch entsprechende Anschläge ausgeschaltet werden.

Führt man die Ankopplung des Schloßes an das Pfandschloß unmittelbar über das Schloß selbst durch, also entsprechend der ersten Alternative, so besteht auch die Möglichkeit, das dort erwähnte Verriegelungsteil als Spreizteil auszubilden, das bei freigegebenem Schloß zur Verriegelung mit dem Zugmittel unter Bildung einer Schlaufe dient. Selbstverständlich kann das Schloß aber auch über unterschiedliche Verriegelungsteile an das Pfandschloß bzw. an das Zugmittel angekoppelt werden.

Eine andere Alternative besteht darin, daß anstelle des Schlosses mitsamt seinem Schlüssel nur der Schlüssel durch das Pfandschloß freigegeben wird, während das Schloß an dem Zugmittel frei zugänglich, aber nicht wegnehmbar zur Verfügung gehalten wird. Dabei empfiehlt es sich, dem Kunden klarzumachen, welches Schloß zu welchem Pfandschloß gehört, damit es nicht zu Verwechslungen kommt, wenn vor dem Laden eine Vielzahl von Pfandschlössern angebracht ist. Diese Zuordnung kann dadurch erfolgen, daß das Zugmittel mit dem Schloß direkt am zugehörigen Pfandschloß befestigt ist oder daß man an Pfandschloß und zugehörigem Schloß gleiche Nummern oder dergleichen anbringt.

Schließlich besteht eine Alternative auch darin, daß das Pfandschloß mit einem durch ein Verschlußteil zu öffnenden Behälter zusammenwirkt, der das mit dem Zugmittel verbundene Schloß mitsamt seinem Schlüssel aufnimmt und dessen Verschlußteil durch das Pfandschloß verriegelbar ist, wobei das Schloß oder dessen Schlüssel zur Betätigung des Pfandschlosses ausgebildet ist. Dabei wird ebenso wie bei den zuvor genannten Alternativen davon ausgegangen, daß der Schlüssel aus dem Schloß grundsätzlich erst nach dessen Verriegelung abziehbar ist.

Weitere Merkmale und Vorteile der Erfindung ergeben sich aus der nachfolgenden Beschreibung von Ausführungsbeispielen anhand der Zeichnung; dabei zeigt
- Figur 1: das Sicherungssystem in Verbindung mit einem Vorhängeschloß;
- Figur 2: das gleiche System nach Einwurf der Pfandmarke und Freigabe des Schlosses;
- Figur 3: die Verriegelung des Schlosses zur Sicherung der beweglichen Sache gegen Wegnahme;
- Figur 4: eine Darstellung ähnlich Figur 2 bei einer anderen Ausbildung des Schlosses;
- Figur 5: eine Darstellung ähnlich Figur 3 bei dem Schloß gemäß Figur 4.
- Figur 6: eine Darstellung ähnlich Figur 2 bei einer anderen Ausbildung des Schlosses;
- Figur 7: eine Darstellung ähnlich Figur 5 bei dem Schloß gemäß Figur 6.
- Figur 8: eine weitere Ausführungsform der Erfindung.

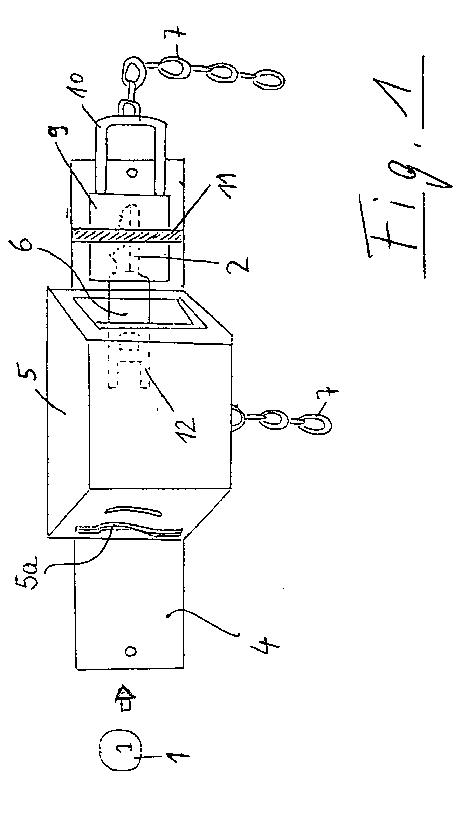

Man erkennt in Figur 1 ein Pfandschloß 5, das über eine Grundplatte 4 ortsfest an einer Mauer oder dergleichen montiert ist. Selbstverständlich kann das Pfandschloß 5 auch in begrenztem Rahmen längs einer Schiene verschiebbar gelagert sein.

Das Pfandschloß 5 trägt unlösbar eine Kette 7, deren anderes Ende unlösbar mit einem Bügelschloß 9 verbunden ist. In dem Schloß 9 steckt der zu seiner Betätigung notwendige Schlüssel 6. Dieser Schlüssel 6, der mit seinem einen Ende 2 im Schloß 9 arretiert ist, ist an seinem Griffbereich als Kopplungselement 12 ausgebildet, derart, daß dieses Kopplungselement 12 im Pfandschloß 5 verriegelbar ist.

Wie Figur 1 außerdem zeigt, ist an der Grundplatte 4 ein Haltebügel 11 angebracht, der das Schloß 9 übergreift und in angekoppelten Zustand des Schlosses dessen Verdrehung verhindert, damit es nicht von dem im Pfandschloß verriegelten Schlüssel 6 abgezogen werden kann.

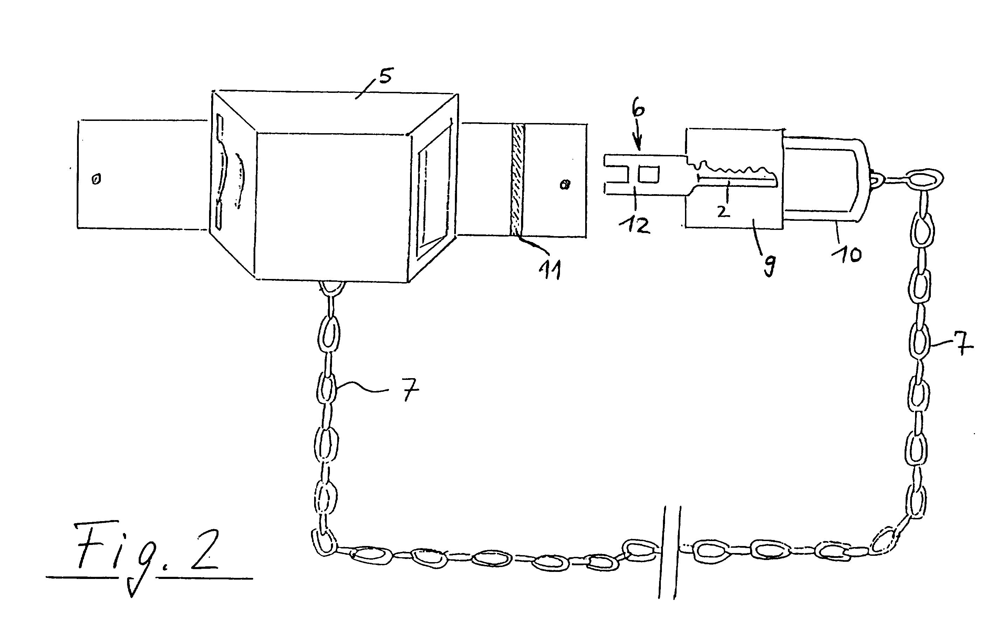

Im Inneren des Pfandschlosses 5 befindet sich ein Verriegelungsmechanismus, wie er im Prinzip durch die Pfandschlösser bei Einkaufswagen bekannt ist. Das heißt, daß gegen Eingabe einer Pfandmarke 1 in den Schlitz 5a des Pfandschlosses die Verriegelung des Schlüssels 6 aufgehoben wird, so daß das Schloß 9 mitsamt dem in ihm steckenden Schlüssel 6 frei wird. Dieser Zustand ist in Figur 2 dargestellt.

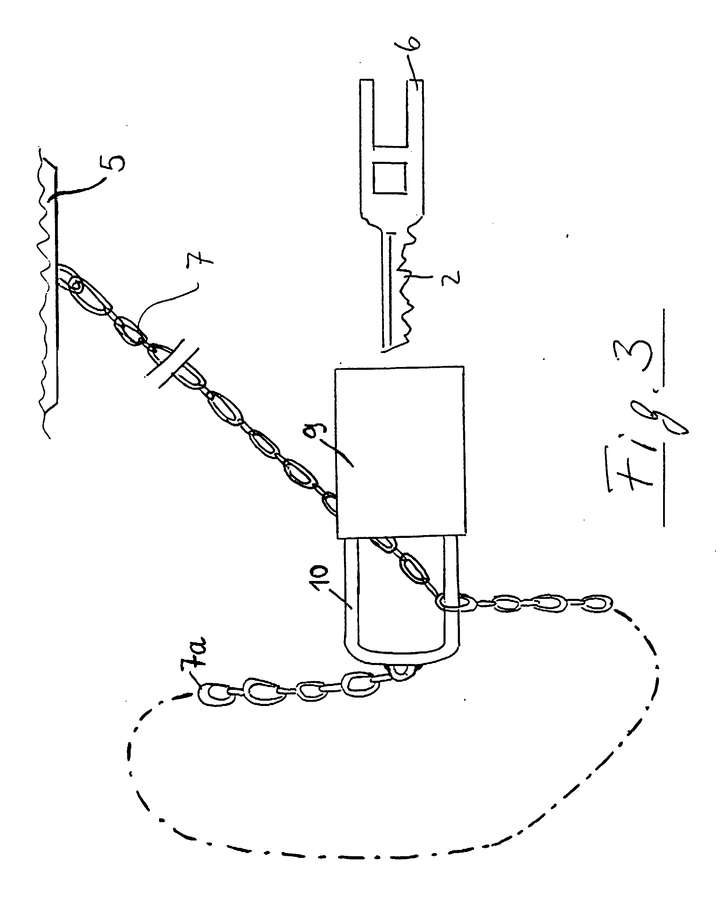

Da das Schloß 9 jetzt keiner Verdrehsicherung mehr unterliegt, kann es mit Hilfe des Schlüssels 6 betätigt, das heißt geöffnet und/oder verschlossen werden, so daß sein Bügel 10 herausgezogen und in eines der Kettenglieder der Kette 7 eingehängt werden kann unter Bildung einer um den Hals des zu sichernden Hundes passend herumgelegten Schlaufe 7a. Dieser Zustand ist in Figur 3 dargestellt - ohne Hund. Der Benutzer drückt dann den Bügel 10 wieder in das Schloß 9 hinein, verriegelt den Bügel durch Betätigung des Schlüssels 6 und zieht den Schlüssel ab, so daß der Hund zuverlässig gegen Diebstahl geschützt ist.

Nach Erledigung seiner Einkäufe steckt der Kunde den Schlüssel 6 wieder in das Schloß 9, öffnet den Bügel 10, so daß er die Schlaufe 7a auflösen und den Hund freimachen kann. Sodann steckt er das Schloß 9 mitsamt dem darin befindlichen Schlüssel 6 wieder in das Pfandschloß 5. Sobald der Schlüssel 6 mit seinem Ende 12 im Pfandschloß 5 ordnungsgemäß eingesteckt ist, wird der Schlüssel automatisch verriegelt und die Pfandmarke 1 zurückgegeben. Wie schon gesagt, wird dabei des Schloß 9 durch den Haltebügel 11 in einer solchen Position relativ zum Schlüssel 6 gehalten, daß es nicht vom Schlüssel 6 abgezogen werden kann.

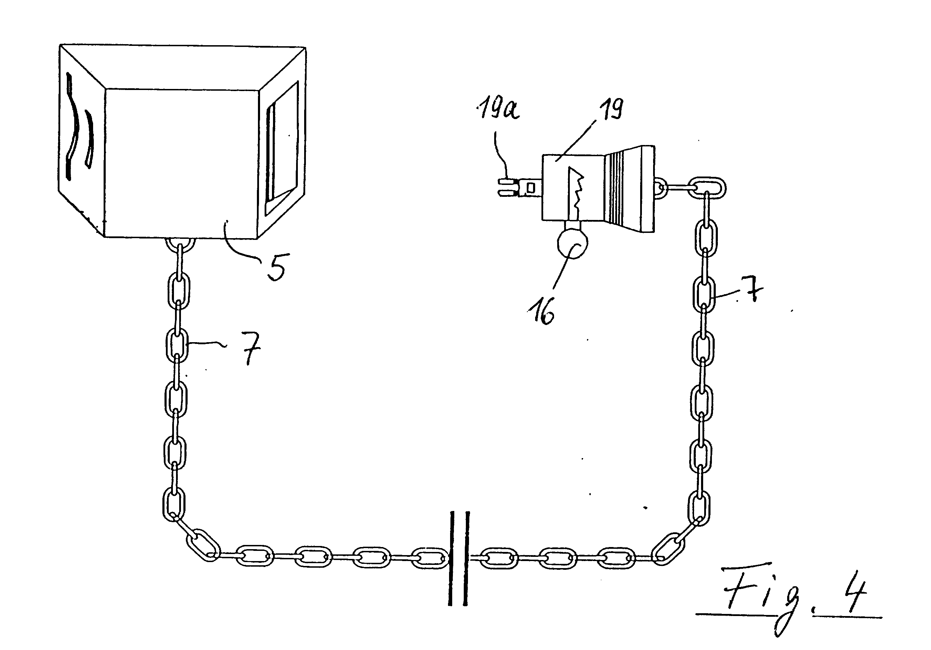

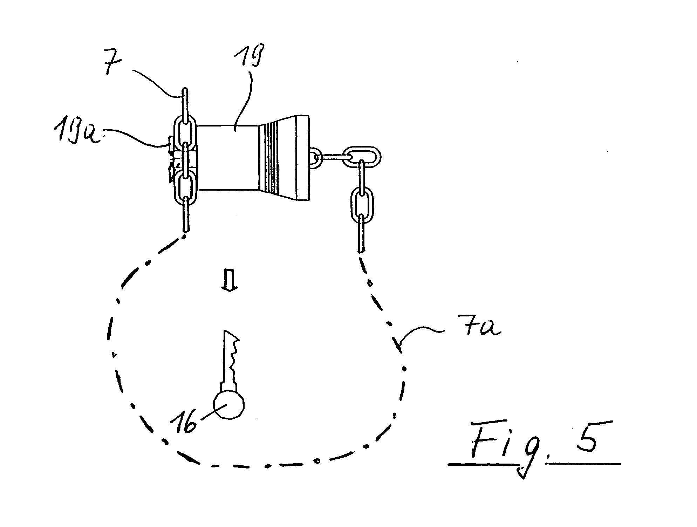

Bei den Figuren 4 und 5 wird anstelle des Vorhängeschlosses 9 ein Spezialschloß 19 verwendet. Dieses Schloß 19 wird nicht über seinen Schlüssel sondern direkt im Pfandschloß 5 verriegelt. Dazu weist es vorstehende Verriegelungsteile 19a auf, die in gleicher Weise wie die Verriegelungsteile 12 des Schlüssels 6 bei der zuvor beschriebenen Bauform im Pfandschloß 5 verriegelt oder gegen Eingabe einer Pfandmarke freigegeben werden.

Darüber hinaus können die Verriegelungsteile 19a mit Hilfe des zu dem Schloß 19 gehörenden Schlüssel 16 an dem Zugmittel 7 festgelegt werden, wie dies in Figur 5 dargestellt ist. Dazu wird am Ende des Zugmittels 7 eine Schlaufe gebildet und die Verriegelungsteile 19a in eine passende Öse des Zugmittels 7 eingesteckt und darin mit Hilfe des Schlüssels 16 formschlüssig verriegelt - im Ausführungsbeispiel durch Spreizung. Erst nach dieser Verriegelung der Verriegelungsteile 19a am Zugmittel 7 kann der Schlüssel 16 abgezogen werden.

Das anschließende Öffnen der Schlaufe und das Wiedereinführen des Schlosses 19 in das Pfandschloß 5 erfolgen in prinzipiell gleicher Weise wie bei den Figuren 1 bis 3. Der einzige Unterschied besteht darin, daß bei der Ausführungsform gemäß Figur 4 und 5 sichergestellt sein muß, daß bei im Pfandschloß verriegeltem Schloß 19 der Schlüssel 16 nicht abgezogen werden kann. Dies läßt sich in einfacher Weise dadurch herbeiführen, daß der Schlüssel 16 nur dann abgezogen werden kann, wenn die Verriegelungsteile 19a nicht in der Ankopplungsposition im Pfandschloß 5 stecken sondern sich in der Verriegelungsposition am Zugmittel gemäß Figur 5 befinden.

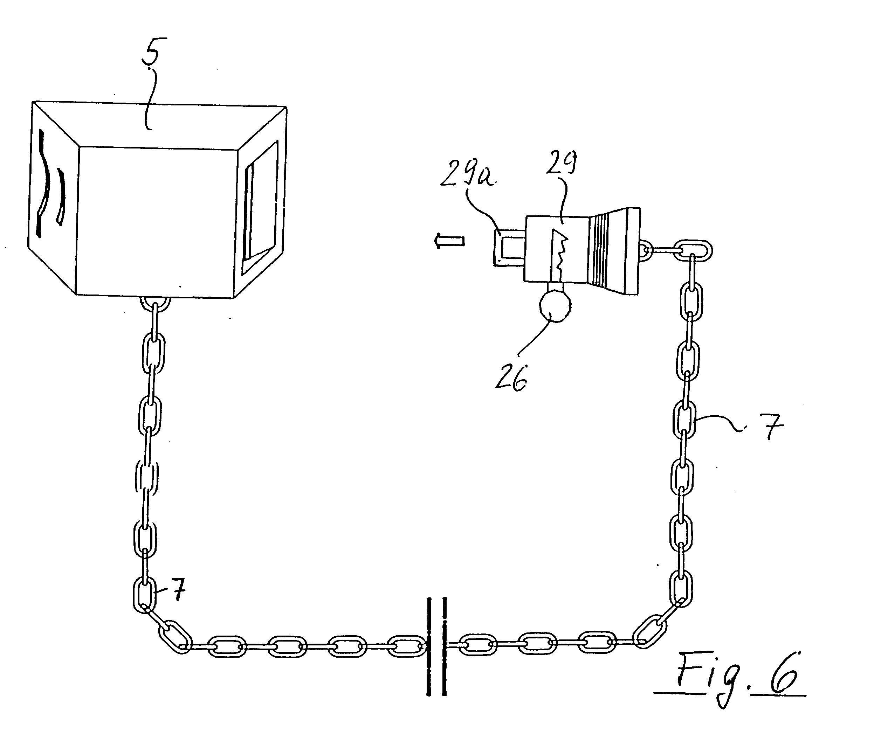

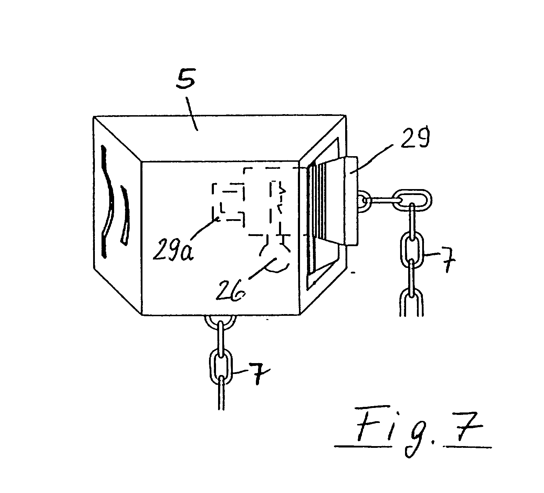

Figur 6 zeigt eine ähnliche Bauform wie in Figur 4 und 5. Hier ist das Schloß 29 als Vorhängeschloß ähnlich dem Schloß 9 ausgebildet. Sein Verschlußbügel 29a dient aber nicht nur zur Festlegung an der Kette 7 mit Hilfe des Schlüssels 26 sondern zugleich auch zur Verriegelung im Pfandschloß 5. Der verriegelte Zustand ist in Figur 7 dargestellt. Man erkennt dabei auch, daß das Schloß 29 so tief im Pfandschloß 5 steckt, daß der Schlüssel 26 ohnehin nicht mehr von außen zugänglich ist. Dabei ist lediglich sicherzustellen, daß die Pfandrückgabe nur dann erfolgt, wenn das Schloß 29 zusammen mit seinem Schlüssel 26 in das Pfandschloß eingeführt wird.

Daneben sind selbstverständlich auch andere konstruktive Ausführungsformen möglich, etwa in der Form, daß das Schloß mit seiner Kette, jedoch ohne Schlüssel zur freien Verfügbarkeit gehalten wird und nur der Schlüssel mit dem Pfandschloß zusammenwirkt.

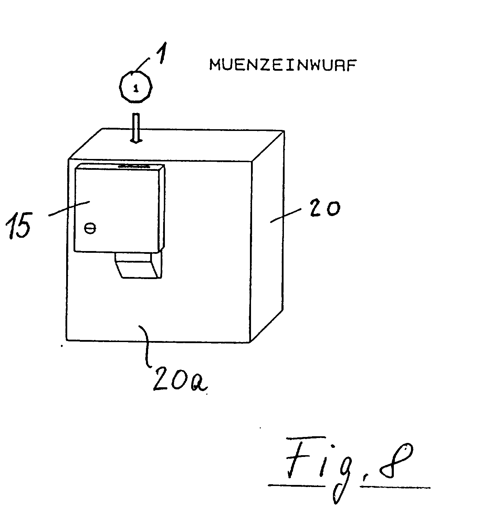

Figur 8 zeigt schließlich noch eine Bauform, bei der mit einem Behälter 20 gearbeitet wird. Das Innere dieses Behälters ist über eine Tür 20a zugänglich, die mit einem Pfandschloß 15 zusammenwirkt. Dieses Pfandschloß 15 gestattet die Öffnung des Behälters erst nach Einwurf einer Pfandmarke. Dem Behälter kann dann entweder ein an einer Kette hängendes Schloß mit Schlüssel entnommen werden oder nur der Schlüssel allein, falls das Schloß mit seiner Kette außerhalb des Behälters angeordnet ist. Der Verschluß der Türe 20 und die Rückgabe der Pfandmarke ist erst dann möglich, wenn in der erstgenannten Alternative das Schloß mit seinem Schlüssel, in der zweitgenannten Alternative der Schlüssel allein in eine spezielle, vom Pfandschloß überwachte Position zurückgelegt worden ist. Dabei besteht auch die Möglichkeit, die Tür 20a mit dem Schloßschlüssel zu verriegeln, wodurch die Pfandmarke freigegeben wird bei gleichzeitiger Arretierung des Schloßschlüssels gegen Wegnahme.

Die Überwachung der Rückgabe von Schlüssel oder Schloß braucht nicht unbedingt durch formschlüssiges Ankoppeln des Schlüssels und/oder des Schlosses am Pfandschloß erfolgen, sondern wäre auch optisch oder induktiv möglich. Dies gilt selbstverständlich auch für die weiter vorn beschriebenen Bauformen.

Auch liegt es im Rahmen der Erfingung, anstelle des dargestellten Schlüssel Chipkarten oder andere codierte Karten und dergleichen zu verwenden.

## Patentansprüche

1. Ortsfestes Pfandschloßsystem, bestehend aus einem Pfandschloß (5, 15) und einem Schlüssel (6, 16, 26) oder dergleichen, welches zum Sichern von beweglichen Sachen, insbesondere zum Anleinen von Hunden gegen unbefugte Wegnahme geeignet ist, wobei der Schlüssel (6, 16, 26) oder dergleichen nach Eingabe eines Pfandes (1) in das Pfandschloß (5, 15) freigegeben wird und das Pfand (1) nach Zurückführung des Schlüssels (6, 16, 26) oder dergleichen zum Pfandschloß (5, 15) herausgegeben wird,
dadurch gekennzeichnet,
daß ein weiteres Schloß (9, 19, 29) an einem Zugmittel (7) nicht wegnehmbar zur Verfügung gehalten wird, welches durch den Schlüssel (6, 16, 26) oder dergleichen betätigbar ist.

2. Vorrichtung nach Anspruch 1,
dadurch gekennzeichnet,
daß das weitere Schloß (9, 19, 29) zusammen mit dem Schlüssel (6, 16, 26) durch das Pfandschloß (5, 15) gesichert bzw. freigegeben wird.

3. Vorrichtung nach Anspruch 1,
dadurch gekennzeichnet,
daß das weitere Schloß an dem Zugmittel (7) frei zugänglich, aber nicht wegnehmbar zur Verfügung gehalten wird.

4. Vorrichtung nach Anspruch 1,
dadurch gekennzeichnet,
daß das Pfandschloß (15) an einem über ein Verschlußteil (20a) zu öffnenden Behälter (20) befestigt ist, dessen Verschlußteil (20a) vom Pfandschloß (15) verriegelbar ist und in dem zumindest der Schlüssel, gegebenenfalls auch das weitere Schloß aufnehmbar ist, wobei der Schlüssel und gegebenenfalls das weitere Schloß mit dem Pfandschloß (15) in Wirkverbindung tritt, derart, daß nach Einschließen des Schlüssels im Behälter (20) das Pfandschloß (15) die Pfandmarke (1) freigibt.

5. Vorrichtung nach einem der vorhergehenden Ansprüche,
dadurch gekennzeichnet,
daß das Zugmittel (7) eine Kette oder ein Metallseil mit mehreren im Abstand zueinander angeordneten Ösen ist.

6. Vorrichtung nach einem der Ansprüche 1 bis 4,
dadurch gekennzeichnet,
daß das weitere Schloß (9, 19, 29) aus einem Schloßkörper und einem im entriegelten Zustand gegenüber diesem beweglichen Bügel (10, 19a, 29a) besteht, der in verriegeltem Zustand des weiteren Schlosses in den Schloßkörper einrastet, die bewegliche Sache bezüglich dem Zugmittel (7) festlegt und den Schlüssel (6, 16, 26) freigibt.

7. Vorrichtung nach Anspruch 2,
dadurch gekennzeichnet,
daß das weitere Schloß (19, 29) ein vorstehendes Verriegelungsteil (19a, 29a) aufweist, das zur Verriegelung im Pfandschloß (5) dient.

8. Vorrichtung nach Anspruch 2,
dadurch gekennzeichnet,
daß bei Verriegelung des weiteren Schlosses (9, 19, 29) durch das Pfandschloß (5) zugleich der Schlüssel (6, 16, 26) oder dergleichen gegen Wegnahme gesichert ist,

9. Vorrichtung nach einem der Ansprüche 1 - 3,
dadurch gekennzeichnet,
daß der Schlüssel (6) einen Fortsatz (12) aufweist, der im Pfandschloß (5) verriegelbar ist.

10. Vorrichtung nach Anspruch 9,
dadurch gekennzeichnet,
daß in verriegelter Stellung des Schlüssels (6) das weitere Schloß (9) gegen Öffnen blockiert ist.

11. Vorrichtung nach einem der Ansprüche 1 - 4,
dadurch gekennzeichnet,
daß das weitere Schloß (19, 29) zumindest ein Verriegelungsteil (19a, 29a) aufweist, das bei freigegenem Schloß zur Verriegelung an der zu sichernden Sache oder zur Verriegelung mit dem Zugmittel (7) unter Bildung einer Schlaufe dient.

## Claims

1. Non-removably installed deposit lock system, consisting of a deposit lock (5, 15) and a key (6, 16, 26) or similar, suitable for securing movable items. in particular for securing dogs against unauthorised removal, wherein the key (6, 16, 26) or similar is released after insertion of a deposit (1) into the deposit lock (5, 15) and the deposit (1) is returned after replacement of the key (6, 16, 26) or similar in the deposit lock (5, 15),
characterised in that
a further non-removable lock (9, 19, 29) is kept available on a means of attachment (7), and is operated with the key (6, 16, 26) or similar.

2. Arrangement according to Claim 1,
characterised in that
the further lock (9, 19, 29) together with the key (6, 16, 26) is secured or released by the deposit lock (5, 15).

3. Arrangement according to Claim 1,
characterised in that
the further lock is kept available so that it is freely accessible on the means of attachment (7), but so that it is non-removable.

4. Arrangement according to Claim 1,
characterised in that
the deposit lock (15) is fixed to a container (20) which is opened via a closure component (20a), the closure component (20a) of which can be locked by the deposit lock (15), and in which at least the key and possibly the further lock can be accommodated, whereby the key and possibly the further lock comes into effective combination with the deposit lock (15) in such a way that following enclosure of the key in the container (20), the deposit lock (15) releases the deposit token (1).

5. Arrangement according to one of the above claims,
characterised in that
the means of attachment (7) is a chain or metal cable with several eyes arranged at a distance from each other.

6. Arrangement according to one of Claims 1 to 4,
characterised in that
the further lock (9, 19, 29) consists of a lock body and a hoop (10, 19a, 29a) which can be moved relative to it in the unlocked state, and which in the locked state of the further lock latches into the body of the lock, secures the moveable item relative to the means of attachment (7) and releases the key (6, 16, 26).

7. Arrangement according to Claim 2,
characterised in that
the further lock (19, 29) has a projecting latching part (19a, 29a), which serves to latch into the deposit lock (5).

8. Arrangement according to Claim 2,
characterised in that
on latching of the further lock (9, 19, 29) with the deposit lock (5), the key (6, 16, 26) or similar is also secured against removal.

9. Arrangement according to one of Claims 1 to 3,
characterised in that
the key (6) has an extension (12) that can latch into the deposit lock (5).

10. Arrangement according to Claim 9,
characterised in that
in the latched state of the key (6), the further lock (9) is blocked against opening.

11. Arrangement according to one of Claims 1 to 4,
characterised in that
the further lock (19, 29) has at least one latching part (19a, 29a) which, when the lock has been freed, serves to latch onto the item to be secured or to latch onto the means of attachment (7) forming a loop.

## Revendications

1. Système fixe de serrure à consigne, composé d'une serrure à consigne (5, 15) et d'une clé (6, 16, 26) ou d'un élément similaire, destiné à la mise en sécurité de choses mobiles, notamment à mettre des chiens en laisse pour éviter leur enlèvement non autorisé, la clé (6, 16, 26) ou l'élément similaire étant libéré(e) après l'introduction d'une consigne (1) dans la serrure à consigne (5, 15) et la consigne (1) étant rendue après la remise de la clé (6, 16, 26) ou de l'élément similaire dans la serrure à consigne (5, 15), **caractérisé en ce qu'**une serrure supplémentaire (9, 19, 29) non retirable est mise à disposition sur un moyen de traction (7), et qu'elle est actionnée par la clé (6, 16, 26) ou l'élément similaire.

2. Dispositif selon la revendication 1, **caractérisé en ce que** la serrure supplémentaire (9, 19, 29) avec la clé (6, 16, 26) est protégée ou libérée par la serrure à consigne (5, 15).

3. Dispositif selon la revendication 1, **caractérisé en ce que** la serrure supplémentaire sur le moyen de traction (7) est maintenue de façon librement accessible mais non retirable.

4. Dispositif selon la revendication 1, **caractérisé en ce que** la serrure à consigne (15) est fixée sur un récipient (20) à ouvrir au moyen d'une pièce de fermeture (20a) qui est verrouillable par la serrure à consigne (15), et dans lequel récipient peut être logée au moins la clé, éventuellement aussi l'autre serrure, la clé, et éventuellement aussi l'autre serrure, entrant en action avec la serrure à consigne (15) de telle sorte qu'après inclusion de la clé dans le récipient (20), la serrure à consigne (15) libère la pièce de consigne (1).

5. Dispositif selon l'une des revendications précédentes, **caractérisé en ce que** le moyen de traction (7) est une chaîne ou un câble métallique avec plusieurs oeillets placés à intervalles les uns des autres.

6. Dispositif selon l'une des revendications 1 à 4, **caractérisé en ce que** la serrure supplémentaire (9, 19, 29) est composée d'un corps de serrure et d'un étrier (10, 19a, 29a) mobile par rapport à celui-ci à l'état déverrouillé, et s'encliquetant dans le corps de serrure lorsque la serrure supplémentaire est verrouillée, qui fixe la chose mobile par rapport au moyen de traction (7) et libère la clé (6, 16, 26).

7. Dispositif selon la revendication 2, **caractérisé en ce que** la serrure supplémentaire (19, 29) présente une pièce de verrouillage (19a, 29a) en saillie qui sert au verrouillage dans la serrure à consigne (5).

8. Dispositif selon la revendication 2, **caractérisé en ce que** lors du verrouillage de la serrure supplémentaire (9, 19, 29) par la serrure à consigne (5), la clé (6, 16, 26) ou l'élément similaire est en même temps protégé(e) contre un retrait.

9. Dispositif selon l'une des revendications 1 à 3, **caractérisé en ce que** la clé (6) présente un prolongement (12) verrouillable dans la serrure à consigne (5).

10. Dispositif selon la revendication 9, **caractérisé en ce que** la serrure supplémentaire (9) ne peut pas être ouverte lorsque la clé (6) est en position verrouillée.

11. Dispositif selon l'une des revendications 1 à 4, **caractérisé en ce que** la serrure supplémentaire (19, 29) présente au moins une pièce de verrouillage (19a, 29a) qui, lorsque la serrure est libérée, sert au verrouillage de la chose à protéger ou au verrouillage par le moyen de traction (7) en formant une boucle.
